# EUROPEAN PATENT APPLICATION

(11) **EP 2 072 019 A1**
(43) Date of publication of application: **24.06.2009**
(21) Application number: 07425813.8
(22) Date of filing: 21.12.2007
(51) Int. Cl.: A61C 8/00

(54) **Dental abutment**

(71) Applicant: Baldi, Paolo Giuseppe, 20123 Milano (IT)
(72) Inventor: Baldi, Paolo Giuseppe, 20123 Milano (IT)
(74) Representative: Arena, Giovanni

(57) **Abstract**

The accessory comprises a pin of an essentially cylindrical and prismatic form, destined to act as a support for a temporary dental appliance reproducing the final form of the dental appliance at least in the portion not emerging from the gingival tissue, for the purpose of allowing, after the phase of integrating the implant in the bone, a single healing phase of the gingival tissues according to an ideal morphology of the gingival tissues surrounding the final dental appliance. Said pin comprises:
- a cavity axially crossing the pin and destined to receive a locking screw for the pin of the implant;
- an external annular relief destined to be superimposed on the mouth of the dental implant, thus closing it
- a portion underlying the annular relief, configured so as to be capable of being inserted like a tongue into the mouth of the implant, without any possibility of pivoting movements;
- an upper portion of the annular relief, superficially carrying relieves, appendices or incisions capable of ensuring the anchoring of a temporary dental appliance made of an easily workable resinous material.

The accessory preferably also comprises a table of a thickness exceeding the length of said pin, which holds funnel-shaped cavities in which to affix said pin and to pour the molten resin for the purpose of forming the mentioned temporary dental appliance.

## Description

The present invention concerns an accessory for dental implanting operations, particularly destined to speed up the healing of gingival tissue.

The osseointegrated dental implants in the bone can be viewed as being metallic substitutes of dental roots. They consist of titanium screws and pins of a circular cross-section, positioned in the maxillary or jaw bone after suitable seats have been prepared in them by surgical drills. The implant may be positioned beneath the gingiva ("submerged implant") or protruding from the same ("non-submerged implant").

In the case of a submerged implant, a waiting time of several months is needed before affixing a dental appliance for the purpose of allowing a bone integration of the implant, i.e. of allowing the bone cells to come into intimate contact with the titanium, thus realizing a firm integration of the implant into the bone.

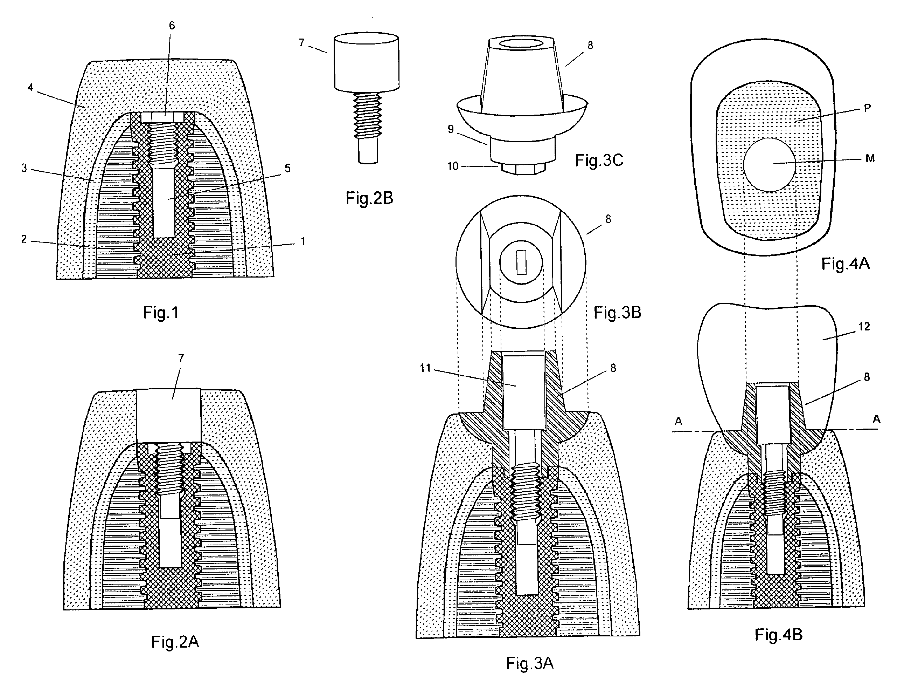

With reference to the enclosed figures from Fig.1 to Figures 4A and 4B, a brief description is herewith offered of the type of known implanting technique that the present invention aims to provide a technical contribution for.

Fig.1 represents, for exemplifying purposes, a simplified cross-sectional view of a submerged implant as it appears at the end of the bone integrating phase. The various elements therein represent:
1: The implant (titanium pin);
2: The bone tissue;
3: The periosteum;
4: The gingival tissue fully covering the implant 1;
5: The threaded cylindrical cavity inside the implant;
6: The mouth of the cavity 5, having a prismatic form with a hexagonal cross-section.

At the end of the bone integrating phase, the dentist starts a second phase by practicing an incision in the gingival tissues above the implant, so as to open the gingiva and insert a screw into the implant (known as "conditioning screw" or "healing screw") having a cylindrical head of a diameter equal to the diameter of the head of the implant and superimposed on the same. Fig. 2B represents a simplified prospective view of a healing screw 7, while Fig. 2A shows the implant of Fig. 1 as it appears when the healing screw is being inserted at the beginning of the second phase.

The gingiva is repositioned around the cylindrical head of the healing screw and allowed to heal over a period of time of several weeks. This allows the formation, around the head of the healing screw, of a cylindrical gingival tissue wherein, in a subsequent third phase, the dental appliance (known as "abutment" or "pillar") made of titanium, gold or ceramic can be inserted in order to support the false tooth replacing the missing natural tooth.

The Figures 3A, 3B and 3C refer to the mentioned third phase of inserting the abutment. In particular, the cross-section in Fig. 3A shows the implant of Fig. 2A as it appears once the screw 7, after ending the second phase, is replaced by a abutment 8, whereof a top view and a prospective view, respectively, are shown in the Figures 3B and 3C.

As shown in Fig. 3A, the abutment 8 presents a cylindrical base 9 of a diameter equal to that of the head of the implant and super imposable to the same, having in its lower portion a projecting relief 10 of a prismatic shape with a hexagonal cross-section, which can be fixed into the prismatic opening of the implant cavity. A screw 11, fit to be inserted into a cylindrical cavity of the abutment, serves to firmly fix the abutment to the implant.

Once the abutment has been inserted into the implant, the dentist takes care of taking an impression of the positioning area of the dental appliance, so as to allow the dental technician to appropriately conform the false tooth that will later be firmly attached to the abutment.

The latter procedure requires a further healing phase of the gingival tissue. In fact in most cases, the applied tooth replacing the natural tooth presents, at the point of emerging from the gingival tissues, a cross-section having an irregular profile and an area substantially exceeding the circular cross-section of the implant, as shown in the example given in the Figures 4A and 4B.

The Fig. 4B shows in fact a vertical cross-section of a dental appliance 12 attached to the underlying abutment 8, while the Fig. 4A shows, in a horizontal cross-section, the considerable difference between the area P of the cross-section of the dental appliance at the level A-A of the emerging gingival tissue with respect to the area M of the cylindrical collar of the same tissue as obtained by the healing screw.

Said considerable difference between the area P of the dental appliance cross-section at the level A-A of the emerging gingival tissue with respect to the area M of the cylindrical collar created by the healing screw induces a pressure of the dental appliance on the gingival tissues, with a resulting local ischaemia and pain for the patient and a frequent need to anesthetize these tissue and to surgically act to remove small portions of gingival tissue to adapt the tissues to the dental appliance, with the consequent need for a further healing phase.

The accessory for dental implanting operations according to this invention aims to eliminate these drawbacks and in particular to:
- speed up the gingival tissues' healing time, by eliminating the second healing phase;
- reduce the patient's discomfort also in terms of a reduced number of incisions of the gingival tissue, of anaesthesias, of pain for dental appliance tests and for their final cementing phase;
- render the impression taking steps more suitable to the needs of an optimum configuration to be applied to the dental appliance (at the hand of the dental technician).

For this purpose, the accessory according to the invention turns out to be characterized as indicated in the subsequent claim 1.

The characteristics of the invention will become more evident from the following description of embodiments of exemplifying and non-limiting character. made with reference to the enclosed drawings, wherein the various figures provide the following simplified views:
- Fig.5:: a prospective view of a pin constituting the main element of the accessory according to the invention, destined to support a temporary dental appliance;
- Fig.6A:: a prospective view of a table according to the invention, destined to facilitate the creation of a temporary dental appliance supported by a pin as shown in Fig. 1;
- Fig.6B:: a partial view of the table of Fig.6A, according to a vertical section taken along the line B-B;
- Fig.7A:: a cross-sectional view of a osseointegrated implant carrying a pin as in Fig.5, with a dental appliance for temporary healing affixed to the same.
- Fig.7B:: a view of the temporary dental appliance according to a horizontal cross-section taken along the line C-C of Fig.7A, evidencing the great difference between the area of the cross-section of the appliance at the point of emerging from the gingival tissue with respect to the area of the cylindrical collar of the same tissue, obtained by a traditional healing screw.

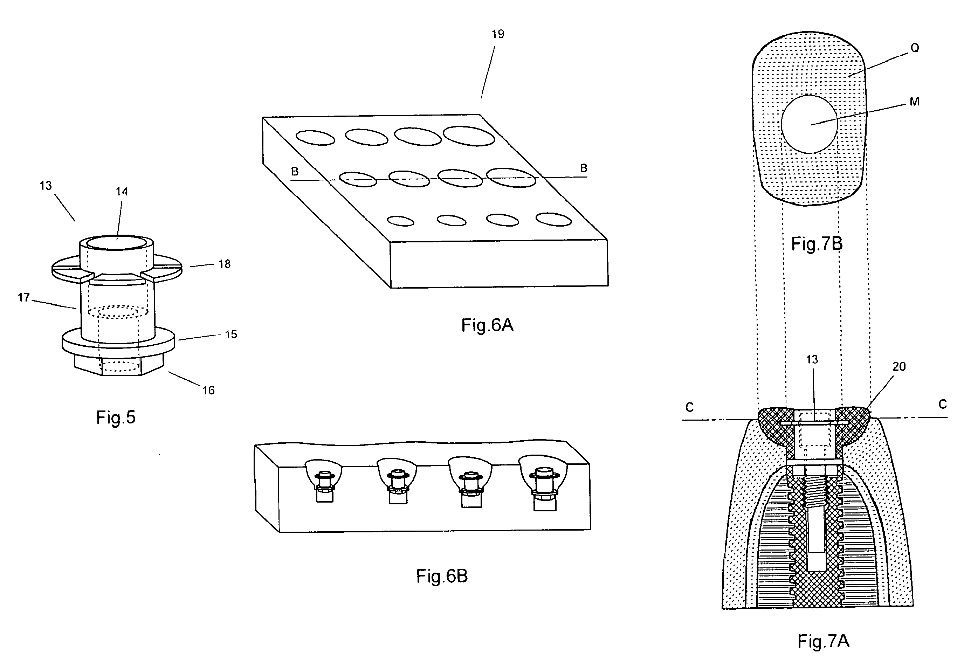

Fig. 5 shows the main element of the accessory according to the invention in a prospective view. This is a pin 13 of an essentially cylindrical or prismatic shape, destined to act as a support for a temporary dental appliance of a so-called "healing" type, which reproduces, at least in the portion not emerging from the gingival tissue, the final shape of the dental appliance, and to be provisionally fixed to a dental appliance for the purpose of allowing, after the osseointegration and after opening the gingiva above the implant by an incision, the formation around said temporary dental appliance and after the necessary healing time, of a collar of gingival tissue capable of creating the ideal morphology of the gingival tissues surrounding the abutment of the dental appliance. In said pin, which is preferably about 3.5 mm heigh, there are present the following parts:
- a cavity 14 axially crossing the pin and destined to receive a locking screw for the implant pin;
- an ring-like relief 15 destined to be superimposed on the mouth of the dental implant, thus closing it;
- a portion 16 underlying the annular relief, shaped so as to allow it to be fixed into the mouth of the implant, without possibility of pivoting movements (it appears in the drawing in a hexagonal prismatic form, in the assumption that the mouth of the implant also has such a form);
- a portion 17 above the annular relief, superficially carrying relieves 18 fit to ensure the anchoring of a temporary dental appliance made of a resinous material, such as for instance an easily workable methyl-metacrylate.

A complementary element, destined to facilitate and speed up the realization of the mentioned temporary dental appliance on the pin, consists of a table carrying funnel-shaped cavities inside which to fix the pin, and simulating, in excess, the form of the temporary dental appliance to be realized. Fig.6A is a simplified representation of a prospective view of an example of said table (19), and Fig.6B represents a partial (enlarged) view of the table of Figure 6A, according to a vertical cross-section taken along the line B-B. Said cavities are appropriately not all identical but of a progressively variable size so as to allow, on a case-to-case basis, the choice of the cavity most suitable for the dimensions of both the dental appliance that is to be realized as well as of the implant that the same is destined for. Once the most suitable cavity has been identified, the pin is fastened to the bottom (by means of the pin's annular relief and the part underlying the same) and the pliable material (a resin) destined to form the temporary dental appliance is poured in.

Once the material has hardened, it is modelled by reducing it with rotating tools until it attains the desired shape, in a rapid and personalized manner. This second personalizing phase is achieved by removing the hardened material (along with the pin that is partially incorporated in the same) from the table 19, and trying the temporary dental appliance on the hollow in the oral cavity, while applying the necessary modifications in subsequent tests (made by re-attaching the dental appliance to the implant in accordance with a perfectly repeatable positioning owing to the pin's engagement on the dental appliance, so as not to allow pivoting movements) until the desired result is achieved, keeping in mind that the objective is to realize, in a single healing phase, the ideal morphology of the gingival tissues surrounding the outlet of the dental appliance abutment.

For the purpose of evidencing the various results achievable with respect to a traditional healing screw, at the end of the healing phase of a gingival tissue by using a temporary dental appliance according to the invention, Fig. 7A shows a cross-sectional view of a bone-integrated implant carrying a pin 13 as shown in Fig. 5, with a temporary dental healing appliance affixed thereto and modelled to the desired personalized shape, and Fig. 7B shows a view of the temporary dental appliance according to a horizontal cross-section taken along the line C-C of Fig. 7A. This latter figure in fact evidences the great difference between the area Q of the appliance cross-section at the point of emerging from the gingival tissue with respect to the area M of the cylindrical collar of the same tissue as obtained by a traditional healing screw.

The healing phase of the gingival tissues realized by using the accessory according to the invention is such that the impression of the jawbone and of the teeth to be subsequently taken will, in the area of the implant, reveal the morphology of the gingival tissues as it will actually remain after concluding the treatment, and this will aid the dental technician in his task of achieving the configuration most suitable for the final dental appliance.

The foregoing description highlights the advantages afforded by the accessory according to the invention:
- a single healing phase of the gingival tissues, carried out in a personalized manner before realizing the final dental appliance and according to a morphology highly similar to the final natural one;
- no anaesthesia needed for the successive passages, no surgical or compressive remodelling;
- advantages for the patient: no discomfort after opening the gingival at the end of the first phase, no further anaesthesia or cut, no pain for the patient due to appliance testing and final cementing;
- advantages for the dental technician: greater speed and simplicity for all the passages relating to the realization of the final dental appliance; in its impression the tissues are in fact appearing as they will finally remain and the technician will have to adapt to (while under the "classic" system. he must act while imagining the way the tissues may heal after the dental appliance has been cemented).
- aesthetic advantages owing to a final healing achieved before realizing the dental appliance, and not a healing marked by an unpredictable outcome occurring after the dental appliance is already installed.

Another circumstance to be added to the foregoing advantages is that once a healing phase is completed, the pin of the temporary dental appliance can be reutilized, after its easy removal from the one-way resinous material wherein it was incorporated, and its subsequent sterilization.

It is evident that the examples of embodiment previously described for illustrative and non-limiting purposes can be subjected to numerous modifications, adaptations, variants and replacements of elements with other functionally equivalent, without thereby abandoning the essence of the invention and the scope of the following claims.

It is in this regard worth noting that the conformation of the pin, as indicated in Fig. 5, is not mandatory. In particular, the relieves 18 may be substituted by incisions or appendices of a different form, provided they are at any rate suitable for ensuring the fastening of the resin. Even the conformation of the base 16 of the pin must not necessarily be prismatic with a hexagonal cross-section, as it is feasible to realize rows of pins with a different base suitable for various types of usable implants (which may differ in both shape and dimension).

## Claims

1. Accessory for dental implanting operations, comprising a pin of an essentially cylindrical or prismatic form, destined to act as a support for a temporary dental appliance reproducing the final form of the dental appliance at least in the portion not emerging from the gingival tissues, for the purpose of allowing, after the phase of osseointegration of the implant and opening the gingiva by incision above the implant, the formation around the temporary dental appliance and after a necessary healing period, a collar of gingival tissue capable of realizing the ideal morphology of the gingival tissues surrounding the head of the dental appliance stub, where said pin is **characterized by** the presence in combination of:
- a cavity axially crossing the pin and destined to receive a screw locking the pin to the implant;
- an external annular relief destined to be superimposed on the mouth of the dental implant, thus closing the same;
- a portion underlying the annular relief, shaped so as to allow it to be fixed into the mouth of the implant without any possibility of pivoting movements;
- an portion overhanging the annular relief superficially carrying other relieves, appendices or incisions fit to ensure the anchoring of a dental appliance made from an easily processable resinous material.

2. Accessory according to Claim 1, **characterized by** the fact that said resinous material is methyl-metacrylate.

3. Accessory according to Claim 1, **characterized by** the fact that it also comprises a table of a thickness exceeding the length of said pin and carrying funnel-shaped cavities fit for receiving:
- the mentioned pin fastened to the bottom of each cavity by means of the mentioned annular relief and the mentioned portion underlying the same,
- the resin destined to anchor itself to the mentioned pin and to form the mentioned temporary dental appliance.
